# EUROPEAN PATENT APPLICATION

(11) **EP 4 561 168 A1**
(43) Date of publication of application: **28.05.2025**
(21) Application number: 23842070.7
(22) Date of filing: 30.06.2023
(51) Int. Cl.: H04W 36/00

(54) **CONDITIONAL CONFIGURATION INFORMATION PROCESSING METHOD AND APPARATUS AND COMMUNICATION DEVICE**

(30) Priority: 19.07.2022 CN 202210850764
(71) Applicant: Vivo Mobile Communication Co., Ltd., Dongguan, Guangdong 523863 (CN)
(72) Inventor: WANG, Yangyang, Dongguan, Guangdong 523863 (CN); BAO, Wei, Dongguan, Guangdong 523863 (CN)
(74) Representative: Lavoix
(86) International application number: PCT/CN2023/104343
(87) International publication number: WO 2024/017005

(57) **Abstract**

This application relates to a conditional configuration information processing method and apparatus, and a communication device, and belongs to the field of communication technologies. The conditional configuration information processing method according to an embodiment of this application includes: obtaining, by a terminal, at least one group of first configuration information and an execution condition of conditional handover, wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; the candidate primary cell comprises a serving cell of the terminal and/or the candidate PSCell comprises the serving cell of the terminal; and determining, by the terminal, a target execution condition of the conditional handover and/or a target CPAC execution condition according to the first configuration information.

## Description

### CROSS-REFERENCE TO RELATED APPLICATIONS

This application claims the priority of Chinese Patent Application No.202210850764.4 filed in China on July 19, 2022, the entire content of which is hereby incorporated by reference.

### TECHNICAL FIELD

This application relates to the field of communication technologies, and specifically, to a conditional configuration information processing method and apparatus, and a communication device.

### BACKGROUND

At present, execution conditions of both conditional handover (Conditional Handover, CHO) and conditional PSCell addition/change (Conditional PSCell Addition /Change, CPAC) are to consider a case in which candidate cells included in the CHO and the CPAC are neighboring cells. A serving cell of a terminal (also referred to as user equipment (User Equipment, UE)) may alternatively be used as a candidate cell (a candidate primary cell or a candidate PSCell associated with the candidate primary cell), but an existing execution condition is not suitable for the serving cell. Therefore, in a case that the serving cell (a primary cell (Primary Cell, PCell)/a primary SCG cell (Primary Secondary Cell, PSCell)) is used as the candidate cell, by using the existing execution condition, the terminal cannot determine how to process the execution condition corresponding to the serving cell.

### SUMMARY

Embodiments of this application provide a conditional configuration information processing method and apparatus, and a communication device, which can resolve a problem of how to determine an execution condition corresponding to a candidate cell in a case that a serving cell is used as the candidate cell.

According to a first aspect, a conditional configuration information processing method is provided, including:
obtaining, by a terminal, at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate primary SCG cell (PSCell) corresponding to the candidate primary cell and a CPAC execution condition corresponding to the configuration information of the candidate PSCell; the candidate primary cell includes a serving cell of the terminal and/or the candidate PSCell includes the serving cell of the terminal; and
determining, by the terminal, a target execution condition of the conditional handover and/or a target CPAC execution condition according to the first configuration information.

According to a second aspect, a conditional configuration information processing method is provided, including:
transmitting, by a first network side device, at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

According to a third aspect, a conditional configuration information processing method is provided, including:
obtaining, by a third network side device, a first message transmitted by a first network side device, where the first message is used for instructing the third network side device to prepare for conditional handover; and
transmitting, by the third network side device, a first response message to the first network side device according to the first message, where the first response message includes at least one group of first configuration information; where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

According to a fourth aspect, a conditional configuration information processing apparatus is provided, applied to a terminal and including:
a first obtaining module, configured to obtain at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; the candidate primary cell includes a serving cell of the terminal and/or the candidate PSCell includes the serving cell of the terminal; and
a first determining module, configured to determine a target execution condition of the conditional handover and/or a target CPAC execution condition according to the first configuration information.

According to a fifth aspect, a conditional configuration information processing apparatus is provided, applied to a first network side device and including:
a first transmission module, configured to transmit at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

According to a sixth aspect, a conditional configuration information processing apparatus is provided, applied to a third network side device and including:
a second obtaining module, configured to obtain a first message transmitted by a first network side device, where the first message is used for instructing the third network side device to prepare for conditional handover; and
a second transmission module, configured to transmit a first response message to the first network side device according to the first message, wherein the first response message includes at least one group of first configuration information; where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

According to a seventh aspect, a terminal is provided. The terminal includes a processor and a memory. The memory stores a program or an instruction executable on the processor, and the program or the instruction, when executed by the processor, implements the steps of the method as described in the first aspect.

According to an eighth aspect, a terminal is provided, including a processor and a communication interface. The communication interface is configured to obtain at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; the candidate primary cell includes a serving cell of the terminal and/or the candidate PSCell includes the serving cell of the terminal; and the processor is configured to determine a target execution condition of the conditional handover and/or a target CPAC execution condition according to the first configuration information.

According to a ninth aspect, a network side device is provided. The network side device includes a processor and a memory. The memory stores a program or an instruction executable on the processor, and the program or the instruction, when executed by the processor, implements the steps of the method as described in the second aspect or the third aspect.

According to a tenth aspect, a network side device is provided, including a processor and a communication interface. The communication interface is configured to transmit at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; the candidate primary cell includes a serving cell of the terminal and/or the candidate PSCell includes the serving cell of the terminal; or, the communication interface is configured to obtain a first message transmitted by a first network side device, wherein the first message is used for instructing the third network side device to prepare for conditional handover; and transmit a first response message to the first network side device according to the first message, where the first response message includes at least one group of first configuration information; where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

According to an eleventh aspect, a conditional configuration information processing system is provided, including: a terminal and a network side device, where the terminal can be configured to execute the steps of the method as described in the first aspect, and the network side device can be configured to execute the steps of the method as described in the second aspect or the third aspect.

According to a twelfth aspect, a readable storage medium is provided, having a program or an instruction stored thereon. The program or the instruction, when executed by a processor, implements the steps of the method as described in the first aspect, or the steps of the method as described in the second aspect or the third aspect.

In a thirteenth aspect, a chip is provided. The chip includes a processor and a communication interface. The communication interface is coupled with the processor, and the processor is configured to run a program or an instruction to implement the method as described in the first aspect, or implement the method as described in the second aspect or the third aspect.

In a fourteenth aspect, a computer program/program product is provided. The computer program/program product is stored in a storage medium. The computer program/program product is run by at least one processor to implement the steps of the method as described in the first aspect, the second aspect, or the third aspect.

In the embodiments of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

### BRIEF DESCRIPTION OF THE DRAWINGS

FIG. 1 is a structural diagram of a communication system to which an embodiment of this application is applicable;
FIG. 2 is a flowchart I of a conditional configuration information processing method according to an embodiment of this application;
FIG. 3 is a flowchart II of a conditional configuration information processing method according to an embodiment of this application;
FIG. 4 is a flowchart III of a conditional configuration information processing method according to an embodiment of this application;
FIG. 5 is a flowchart of interaction of a conditional configuration information processing method according to an embodiment of this application;
FIG. 6 is a schematic diagram I of modules of a conditional configuration information processing apparatus according to an embodiment of this application;
FIG. 7 is a schematic diagram II of modules of a conditional configuration information processing apparatus according to an embodiment of this application;
FIG. 8 is a schematic diagram III of modules of a conditional configuration information processing apparatus according to an embodiment of this application;
FIG. 9 is a structural block diagram of a communication device according to an embodiment of this application;
FIG. 10 is a structural block diagram of a terminal according to an embodiment of this application; and
FIG. 11 is a structural block diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this are interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

It is worth noting that the technology described in the embodiments of this application is not limited to a long term evolution (Long Term Evolution, LTE)/LTE Evolution (LTE-Advanced, LTE-A) system, and can alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following describes a new radio (New Radio, NR) system for the example purpose and uses the term NR in most of the following descriptions. However, these technologies can alternatively be applied to applications except the NR system application, such as a 6th generation (6th Generation, 6G) communication system.

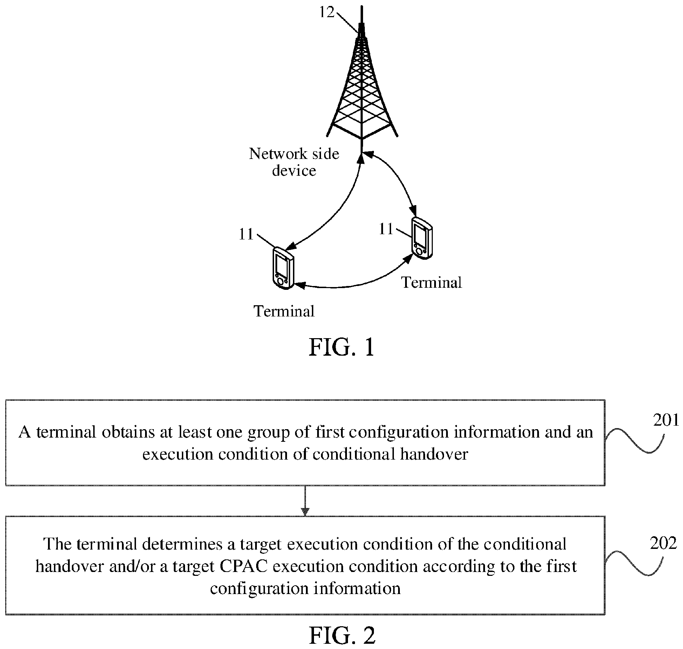

FIG. 1 is a block diagram of a wireless communication system applicable to an embodiment of this application. The wireless communication system includes a terminal 11 and a network side device 12. The terminal 11 can be a mobile phone, a tablet personal computer (Tablet Personal Computer), a laptop computer (Laptop Computer) or also referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted that, in the embodiments of this application, a specific type of the terminal 11 is not limited. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Networks, WLAN) access point, a WiFi node, or the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted, in the embodiments of this application, only the base station in the NR system is taken as an example, but a specific type of the base station is not limited.

To enable a person skilled in the art to better understand the embodiments of this application, the following descriptions are first provided.
1. Conditional handover (Conditional Handover, CHO).

The conditional handover is defined as handover that is performed when one or more handover execution conditions are met. A UE starts to evaluate an execution condition once receiving a CHO configuration, and stops the evaluation once the handover starts to be performed.

### Principle of CHO:

A CHO configuration includes a configuration of a CHO candidate cell generated by a candidate gNB and an execution condition generated by a source gNB.

An execution condition may include one or two triggering conditions (CHO events A3/A5). A candidate cell only supports that a single reference signal (Reference Signal, RS) type and at most two different triggering quantities (e.g. reference signal received power (Reference Signal Received Power, RSRP) and reference signal received quality (Reference Signal Received Quality, RSRQ), and a signal-to-noise and interference ratio (signal-to-noise and interference ratio, SINR)) can be simultaneously configured.

Before any CHO execution condition is met, once a handover (Handover, HO) command is received, UE performs an HO procedure regardless of any previously received CHO configuration.

When CHO is performed, namely, when the UE starts to be synchronized with a target cell, the UE does not perform monitoring in a source cell.

### 2. Dual connectivity (Dual Connectivity, DC).

Dual Connectivity means that a network provides resources of two network nodes/base stations (access network elements) for UE. One network node is referred to as a master node (Master Node, MN), and the other network node is referred to as a secondary node (Secondary Node, SN). Each network node may use one cell to provide a service to the UE. Alternatively, a carrier aggregation (Carrier Aggregation, CA) technology may be used, namely, a plurality of serving cells controlled by the node are configured for the UE. One or more cells controlled by one node form a cell group (Cell Group, CG). The master node MN controls a master cell group (Master Cell Group, MCG), and the secondary node SN controls a secondary cell group (Secondary Cell Group, SCG). Each cell group includes one special cell (Special Cell, SpCell) and M secondary cells (Secondary Cell, Scell). In an NR, a current value of M is [0, 31], and may be subsequently expanded. The special cell in the MCG is referred to as a primary cell (Primary Cell, PCell), and the special cell in the SCG is referred to as a PSCell (Primary Secondary Cell, PSCell).

In the NR, if the UE applies an SCG configuration that is provided by an NW containing a synchronization reconfiguration indication (ReconfigurationWithSync IE), and if the UE successfully completes RACH on a candidate/target PSCell, the UE successfully performs PSCell change.

### 3. Conditional PSCell change (Conditional PSCell Change, CPC) procedure.

A Network (NetWork, NW) pre-configures a CPC configuration for a dual connectivity UE, and the UE evaluates whether an execution condition is satisfied. Once the execution condition is satisfied, the UE applies a pre-configured target secondary cell group (Secondary Cell Group, SCG) configuration to perform PSCell change.

### 4. Conditional PSCell addition (Conditional PSCell Addition, CPA).

A configuration method and execution process for CPA are similar to those for CPC. A difference lies in that during CPA evaluation, a triggering condition for applying an SCG reconfiguration parameter is generally as follows: signal quality of a candidate/target PSCell is greater than a specified threshold for a pre-configured time duration. Because UE does not have a serving PSCell in this case, the signal quality of the candidate/target PSCell cannot be compared with signal quality of a serving PSCell.

At present, CHO and conditional PSCell addition/change (Conditional PSCell Addition/Change, CPAC) are performed separately, namely, a CHO message does not include configuration information of the CPAC. Therefore, a current serving cell may never be a candidate PSCell. However, in R18, CHO containing a target MCG and a candidate SCG for CPC/CPA is to be studied. In this scenario, configuration information of the CHO may include configuration information of the CPA. When a CHO condition and a corresponding CPA condition of UE that is originally in single connectivity or dual connectivity are satisfied, the UE may directly switch to a DC mode.

In R18, a serving cell (PCell/PSCell/SCells) before the UE performs CHO with CPAC (a CHO message includes CPAC configuration information) may alternatively be used as a candidate PSCell of a candidate PCell. In a current specification, an execution condition of the CPAC only includes event A4 (quality of a neighboring cell is greater than or equal to a threshold) and event B1 (quality of an Inter-RAT neighboring cell is greater than or equal to a threshold) or event A3 (quality of a candidate neighboring cell of conditional reconfiguration is greater than or equal to quality of a the special cell (SpCell), i.e., PCell/PSCell) and event A5 (quality of special cell (SpCell) is less than or equal to threshold 1; the quality of the candidate neighboring cell of the conditional reconfiguration is greater than or equal to threshold 2). Attention is paid to only a scenario in which a neighboring cell is used as a candidate PSCell. However, in a scenario in which the serving cell (PSCell/PCell/SCell) is also a candidate cell of the CPAC, the UE cannot use the execution condition, so that this part of configuration information is completely wasted.

Similarly, for a candidate PCell, its execution condition in the current protocol only includes event A3 (quality of a candidate neighboring cell of conditional reconfiguration is greater than or equal to quality of a special cell (SpCell) i.e., PCell/PSCell) and event A5 (quality of special cell (SpCell) is less than or equal to a threshold 1; the quality of the candidate neighboring cell of the conditional reconfiguration is greater than or equal to threshold 2). Attention is paid to only a scenario in which a neighboring cell is used as the candidate PSCell. The scenario in which the serving cell (PSCell/PCell/SCell) is used as the candidate PCell is not considered either.

A conditional configuration information processing method according to an embodiment of this application will be described below through some embodiments and their application scenarios in combination with the accompanying drawings.

As shown in FIG. 2, the embodiments of this application provide a conditional configuration information processing method, including:
Step 201: A terminal obtains at least one group of first configuration information and an execution condition of conditional handover. Each group of first configuration information includes a group of configuration information of a candidate primary cell of conditional handover and/or at least one group of conditional PSCell addition/change (CPAC) configuration information. Each group of CPAC configuration information includes configuration information of a candidate PSCell corresponding to the candidate primary cell and a CPAC execution condition corresponding to the configuration information of the candidate PSCell. The candidate primary cell includes a serving cell of the terminal and/or the candidate PSCell includes the serving cell of the terminal.

The serving cell of the UE includes a serving cell when UE receives the first configuration information, and includes at least one of a PCell, an SCell, and a PSCell.

Optionally, the terminal obtains the at least one group of first configuration information and the execution condition of the conditional handover from a first network side device (a source base station).

Step 202: The terminal determines a target execution condition of the conditional handover and/or a target CPAC execution condition according to the first configuration information.

In this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as the candidate primary cell or the candidate PSCell, thereby achieving a purpose of correctly processing the corresponding execution condition when the serving cell is used as the candidate primary cell or the candidate PSCell. Thus, the terminal can subsequently perform condition evaluation on the target execution condition and/or the target CPAC execution condition. Namely, when the target execution condition and/or the target CPAC execution condition is satisfied, corresponding operations are performed, such as CHO or CPAC or CHO with CPAC (CHO with CPAC).

A UE performs CHO with CPAC, which includes any one of the following: When an execution condition of a candidate primary cell and an execution condition corresponding to a candidate PSCell corresponding to the candidate primary cell are satisfied, the UE performs handover on the candidate primary cell, and adds the candidate PSCell; and when the execution condition of the candidate primary cell is satisfied, but the execution condition corresponding to the candidate PSCell corresponding to the candidate primary cell is not satisfied, the UE performs handover on the candidate primary cell.

In an optional implementation, in a case that the candidate PSCell corresponding to the candidate primary cell is the same as the serving cell of the terminal, the CPAC execution condition corresponding to the candidate PSCell is a first execution condition;
where the first execution condition is associated with a first triggering condition; and the first triggering condition includes at least one of the following:
quality of a serving cell included in conditional configuration information is greater than or equal to a first threshold;
the quality of the serving cell included in the conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

The above first execution condition may be configured by a candidate master base station or a candidate secondary base station.

In this implementation, in the case that the candidate PSCell corresponding to the candidate primary cell is the same as the serving cell of the terminal, a network side device configures the CPAC execution condition corresponding to the candidate PSCell to be the first execution condition, so that the terminal can determine the CPAC execution condition for the serving cell.

In an optional implementation, in a case that the candidate primary cell is the same as the serving cell of the terminal, the conditional execution condition corresponding to the candidate primary cell is a second execution condition;
where the second execution condition is associated with a second triggering condition; and the second triggering condition includes at least one of the following:
quality of a serving cell included in conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, the second execution condition is configured by a source base station.

In this implementation, in the case that the candidate PSCell corresponding to the candidate primary cell is the same as the serving cell of the terminal, a network side device configures the execution condition of the conditional handover corresponding to the candidate primary cell to be the second execution condition, so that the terminal can determine the execution condition of the conditional handover for the serving cell.

Optionally, the terminal determines a target CPAC execution condition according to the first configuration information, which includes:
In a case that a triggering condition associated with the CPAC execution condition is a third triggering condition, and the candidate PSCell corresponding to the CPAC execution condition is a serving cell, it determines that a triggering condition associated with the target CPAC execution condition is a fourth triggering condition;
where the third triggering condition includes at least one of the following: quality of a candidate neighboring cell included in conditional configuration information is greater than or equal to a fifth threshold;
quality of different Inter-radio access technology (Inter-Radio Access Technology, Inter-RAT) neighboring cells included in the conditional configuration information is greater than or equal to a sixth threshold;
the quality of the candidate neighboring cell included in the conditional configuration information is greater than or equal to quality of a special cell (SpCell); and
the quality of the SpCell is less than or equal to a seventh threshold and the quality of the candidate neighboring cell included in the conditional configuration information is greater than or equal to an eighth threshold;
the fourth triggering condition includes at least one of the following:
   quality of a serving cell included in the conditional configuration information is greater than or equal to the fifth threshold or the sixth threshold;
   the quality of the serving cell included in the conditional configuration information is greater than or equal to the quality of the special cell (SpCell);
   the quality of the SpCell is less than or equal to the seventh threshold and the quality of the serving cell included in the conditional configuration information is greater than or equal to the eighth threshold; and
   the conditional configuration information includes a group of first configuration information and an execution condition of corresponding conditional handover.

Optionally, the terminal determines a target execution condition of the conditional handover according to the first configuration information, which includes:
In a case that a triggering condition associated with the execution condition of the conditional handover is a fifth triggering condition, and the candidate primary cell corresponding to the execution condition of the conditional handover is a serving cell, it determines that the triggering condition associated with the execution condition of the conditional handover is a sixth triggering condition;
where the fifth triggering condition includes at least one of the following:
   quality of a candidate neighboring cell included in conditional configuration information is greater than or equal to quality of a special cell (SpCell); and
   the quality of the SpCell is less than or equal to a ninth threshold and the quality of the candidate neighboring cell included in the conditional configuration information is greater than or equal to a tenth threshold;
   the sixth triggering condition includes at least one of the following:
      quality of a serving cell included in the conditional configuration information is greater than or equal to the quality of the special cell (SpCell);
      the quality of the SpCell is less than or equal to the ninth threshold and the quality of the serving cell included in the conditional configuration information is greater than or equal to a tenth threshold; and
      the conditional configuration information includes a group of first configuration information and an execution condition of corresponding conditional handover.

Optionally, after the terminal determines a target execution condition of the conditional handover and/or a target CPAC execution condition according to the first configuration information, the method further includes:
The terminal performs condition evaluation according to the target execution condition and/or the target CPAC execution condition.

In this embodiment of this application, after the target execution condition and/or the target CPAC execution condition is determined, the condition evaluation may be performed in an existing manner, and details are not elaborated here.

In this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

It should be noted that, in this embodiment of this application, quality of a cell (a serving cell or a neighboring cell) may be, for example, represented by a sum of a measurement result of the cell and one or more parameters configured by a network, or may be represented by a difference between a measurement result of the cell and one or more parameters configured by a network side. The parameters include at least one of the following: an offset value corresponding to an event, a frequency-point-specific offset value corresponding to a reference signal, and a cell-specific offset value corresponding to the cell. The measurement result of the cell includes an RSRP, an RSRQ, or an SINR of reference signal included in the cell.

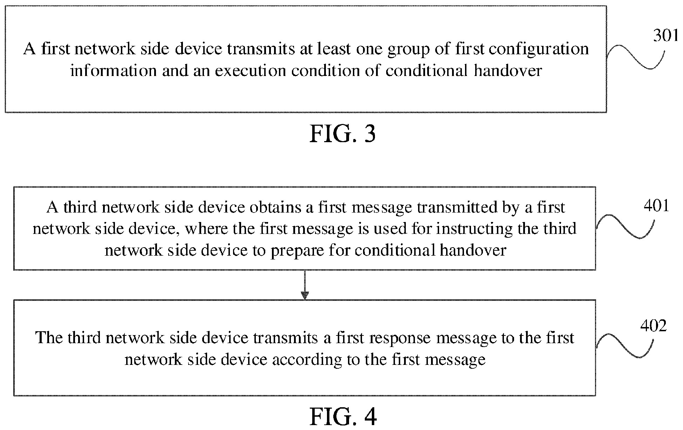

As shown in FIG. 3, the embodiments of this application further provide a conditional configuration information processing method, including:
Step 301: A first network side device transmits at least one group of first configuration information and an execution condition of conditional handover. Each group of first configuration information includes a group of configuration information of a candidate primary cell of conditional handover and/or at least one group of conditional PSCell addition/change (CPAC) configuration information. Each group of CPAC configuration information includes configuration information of a candidate PSCell corresponding to the candidate primary cell and a CPAC execution condition corresponding to the configuration information of the candidate PSCell. The candidate primary cell includes a serving cell of a terminal and/or the candidate PSCell includes the serving cell of the terminal.

Optionally, the first network side device is a source base station. The first network side device transmits the at least one group of first configuration information and the execution condition of the conditional handover to the terminal.

In this embodiment of this application, the first network side device transmits at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

Optionally, in a case that the candidate PSCell corresponding to the candidate primary cell is the same as the serving cell of the terminal, the CPAC execution condition corresponding to the candidate PSCell is a first execution condition;
where the first execution condition is associated with a first triggering condition; and the first triggering condition includes at least one of the following:
quality of a serving cell included in conditional configuration information is greater than or equal to a first threshold;
the quality of the serving cell included in the conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, in a case that the candidate primary cell is the same as the serving cell of the terminal, the first network side device configures the execution condition of the conditional handover corresponding to the candidate primary cell to be a second execution condition;
where the second execution condition is associated with a second triggering condition; and the second triggering condition includes at least one of the following:
quality of a serving cell included in conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, before a first network side device transmits at least one group of first configuration information and an execution condition of conditional handover, the method further includes:
The first network side device transmits a first message to a target base station, where the first message is used for instructing the target base station to prepare for conditional handover;
a first response message transmitted by the target base station is obtained, where the first response message includes the at least one group of first configuration information; and
the at least one group of first configuration information is obtained according to the first response message.

In this embodiment of this application, the first message may be specifically a handover request message, or may certainly be another message. After obtaining the above first message, the target base station (a candidate MN) interacts with a candidate SN, to obtain configuration information, transmitted by the candidate SN, of the candidate PSCell. Optionally, the CPAC execution condition corresponding to the candidate PSCell may be determined by the candidate SN or the candidate MN.

Optionally, the first message includes a candidate cell recommended by the first network side device. The recommended candidate cell includes at least one of a candidate primary cell and a candidate PSCell. The candidate cell is different from the serving cell of the terminal.

Optionally, at least one of the candidate primary cell in each group of first configuration information transmitted by the target base station and the candidate PSCell corresponding to the candidate primary cell is selected by a second network side device from the candidate cell recommended by the first network side device.

The second network side device includes at least one of the target base station, a candidate MN corresponding to the target base station, and a candidate SN determined by the candidate MN corresponding to the target base station.

Optionally, after a first response message transmitted by the target base station is obtained, the method further includes:
in a case that at least one of the candidate primary cell in target first configuration information included in the first response message and the candidate PSCell corresponding to the candidate primary cell is the serving cell, the first network side device discards the first response message, or discards the target first configuration information in the first response message.

Optionally, after the at least one group of first configuration information is obtained according to the first response message, the method further includes:
in a case that a first candidate primary cell in the first configuration information is the same as the serving cell of the terminal, the first network side device does not configure an execution condition of conditional handover for the first candidate primary cell, and transmits refuse information to a third network side device, where the refuse information is used for instructing the third network side device to release a resource.

The third network side device includes a candidate MN corresponding to the target base station.

In this embodiment of this application, the first network side device transmits at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

As shown in FIG. 4, the embodiments of this application further provide a conditional configuration information processing method, including:
Step 401: A third network side device obtains a first message transmitted by a first network side device, where the first message is used for instructing the third network side device to prepare for conditional handover.
Step 402: The third network side device transmits a first response message to the first network side device according to the first message, where the first response message includes at least one group of first configuration information; where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

Optionally, the above third network side device is a candidate MN corresponding to the target base station.

In this embodiment of this application, the third network side device obtains a first message transmitted by a first network side device. The third network side device transmits a first response message to the first network side device according to the first message, so that the first network side device transmits at least one group of first configuration information and an execution condition of conditional handover to the terminal according to the first response message. The terminal determines a target execution condition of the conditional handover and/or a target CPAC execution condition according to the first configuration information, namely, determines the target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

Optionally, the third network side device transmits a first response message to the first network side device according to the first message, which includes:
The third network side device selects at least one candidate primary cell according to the first message;
the third network side device configures CPAC configuration information for a candidate PSCell corresponding to each selected candidate primary cell;
at least one group of first configuration information is obtained according to the configuration information of the candidate primary cell, the configuration information of the candidate PSCell corresponding to the candidate primary cell, and the CPAC configuration information; and
the first response message carrying the first configuration information is transmitted to the first network side device.

Optionally, the above configuration information of the candidate PSCell corresponding to the candidate primary cell is transmitted by a candidate SN to the third network side device.

Optionally, the first message includes a candidate cell recommended by the first network side device. The recommended candidate cell includes at least one of a candidate primary cell and a candidate PSCell. The candidate cell is different from the serving cell of the terminal.

At least one candidate primary cell is selected, which includes:
The candidate primary cell is selected from the candidate cell recommended by the first network side device.

Optionally, the third network side device configures CPAC configuration information for a candidate PSCell corresponding to each selected candidate primary cell, which includes:
in a case that the candidate PSCell corresponding to the candidate primary cell is different from the serving cell of the terminal, the third network side device configures the CPAC configuration information for the candidate PSCell corresponding to the candidate primary cell.

Optionally, the first message includes identification information of the serving cell of the terminal.

After the third network side device selects at least one candidate primary cell according to the first message, the method further includes: In a case that a second candidate PSCell corresponding to the candidate primary cell is the same as the serving cell of the terminal, the third network side device does not configure CPAC configuration information for the second candidate PSCell, and transmits release information to a candidate SN corresponding to the second candidate PSCell, where the release information is used for instructing the candidate SN corresponding to the second candidate PSCell to release a resource.

In this embodiment of this application, the third network side device obtains a first message transmitted by a first network side device, where the first message is used for instructing the third network side device to prepare for conditional handover. The third network side device transmits a first response message to the first network side device according to the first message, where the first response message includes at least one group of first configuration information. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

The conditional configuration information processing method of this application will be explained below in conjunction with specific embodiments.

In a first specific embodiment of this application, a first execution condition is defined. The first execution condition is associated with a serving cell. The first execution condition is configured by a network side only in a case that the serving cell is a candidate PSCell. The first execution condition is associated with N first triggering conditions. The first triggering condition is associated with a conditional event A1 (condEvent A1), or is associated with a condEvent A1-like conditional event (condEvent A1-like). Definitions of condEvent A1 and condEvent A1-like are shown in Table 1.

**Table 1**

| | | |
|---|---|---|
| condEvent A1 | The quality of the serving cell is greater than or equal to a threshold | Entry condition: *Ms-Hys > Thresh* |
| | | Leave condition: *Ms + Hys < Thresh* |
| condEventA 1-like | The quality of the serving cell is greater than or equal to a threshold | Entry condition: *Ms + Ofs + Ocs-Hys > Thresh* or *Ms + Ofs-Hys > ThreshorMs + Ocs-Hys > Thresh* |
| | | Leave condition: *Ms + Ofs + Ocs + Hys < Thresh* or *Ms + Ofs-Hys < Thresh* or *Ms + Ocs-Hys < Thresh* |

Ms represents a measurement result of the serving cell (no offset is considered).

Ofs represents a serving cell measurement event offset, and Ocs represents a serving-cell-specific offset, both of which are configured by an RRC. Ofs and Ocs are set to 0 if they are not configured by the RRC.

Hys is a hysteresis parameter of a serving cell measurement event, and is configured by the RRC.

For an RSRP, Ms is represented in dBm, and for an RSRQ and an RS-SINR, Ms is represented in dB. Ofs, Ocs, and Hys are represented in dB, and Thresh is represented in a unit that is the same as Ms.

Optionally, in addition to the foregoing defined parameters, the configuration information of the first triggering conditions further includes first triggering time.

For an execution condition associated with CPA or CPC, when the execution condition includes the first execution condition, if the measurement result of the serving cell satisfies the entry conditions of the events associated with the triggering conditions included in the first execution condition within the first triggering time, it is considered that the serving cell satisfies the triggering conditions.

If measId corresponding to the triggering conditions is modified/deleted or does not exist, or if the measurement result of the serving cell satisfies the leave conditions of the events associated with the triggering conditions within the first triggering time, it is considered that the serving cell does not satisfy the triggering conditions.

If the serving cell satisfies all the triggering conditions included in the first execution condition, it is considered that the serving cell satisfies the first execution condition.

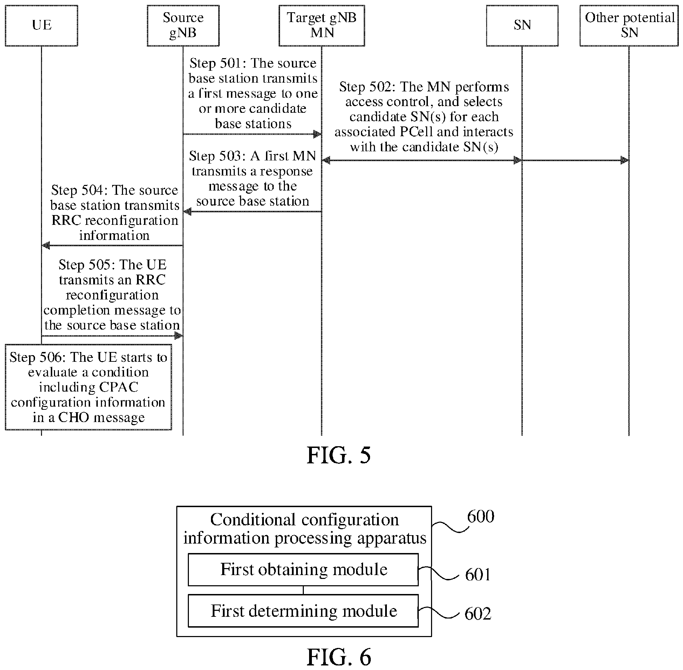

As shown in FIG. 5, the method of this embodiment of this application includes:
Step 501: A source base station transmits a first message to one or more candidate base stations. The first message instructs a target base station to prepare for CHO with CPAC.

Optionally, in a case that a source base station and UE support the CHO with CPAC, the foregoing step 501 is executed.

Optionally, the first message is a HANDOVER REQUEST message, and the first message may alternatively be another message. When the first message is the HANDOVER REQUEST message, the HANDOVER REQUEST message may be explicitly specified for the CHO with CPAC (for example, indication information is added to the message to indicate the CHO with CPAC) or implicitly indicated (for example, the message includes configuration information related to CPAC).

Optionally, the first message includes candidate PCell(s) and/or candidate PSCell(s) recommended by the source base station.

Optionally, the first message includes a cell identification of a current serving cell (a PCell, a PSCell, and/or a SCell) of the UE, and the cell identification may be one or more of a frequency point, a PCI, and a serving cell Id.

Step 502: A candidate target base station 1 (a first MN) performs access control, and the first MN selects candidate SN(s) for each associated PCell and interacts with the candidate SN(s).

The first MN or a first SN configures an execution condition for a candidate PSCell associated with a candidate Pcell. The first SN is an SN associated with the candidate PSCell.

A process of interaction between the first MN and the first SN includes that the first MN transmits an SN addition request (SN Addition Request) to the first SN, and the first SN transmits an SN addition request acknowledge message (SN Addition Request Acknowledge) to the first MN.

Optionally, if a cell identification of a PSCell included in a first response message of a candidate SN (the first SN) is the same as that of the serving cell, the first MN determines that an execution condition corresponding to the configuration information of the PSCell is a first execution condition, and the first response message includes configuration information, transmitted by the first SN to the first MN, of the candidate PSCell.

Optionally, if a cell identification of a candidate PSCell selected by the first SN is the same as that of the serving cell, the first SN determines that an execution condition corresponding to configuration information of the PSCell is a first execution condition.

Step 503: The first MN transmits a response message to the source base station.

The response message transmitted by the first MN to the source base station may be a HANDOVER REQUEST ACKNOWLEDGE message), and includes one or more groups of configuration information of the CHO with CPAC. A group of configuration information of the CHO with CPAC includes configuration information of a candidate PCell, configuration information of one or more candidate PSCell(s) associated with the candidate PCell, and a CPAC execution condition. Optionally, the group of configuration information of the CHO with CPAC further includes configuration information of other MCG/SCG Scells in a target MCG and/or a target SCG.

Step 504: The source base station transmits RRC reconfiguration information to the UE, where the RRC reconfiguration information includes one or more groups of configuration information of the CHO with CPAC and an execution condition of CHO.

A piece of RRC reconfiguration information includes a group of configuration information of the CHO with CPAC. Or, a piece of RRC reconfiguration information includes all pieces of configuration information of the CHO with CPAC, which are included in the response information transmitted by a candidate target base station. or, a piece of RRC reconfiguration information includes all pieces of configuration information of the CHO with CPAC, which are included in the response information transmitted by all the candidate target base stations.

Step 505: The UE transmits an RRC reconfiguration completion message to the source base station.

The UE transmits the RRC reconfiguration completion message to the source base station, to notify the source base station that the UE has received the RRC reconfiguration information. The UE stores the RRC reconfiguration message.

Step 505 is an optional step.

Step 506: The UE starts to evaluate a condition of the CHO with CPAC.

Specifically, Step 506 includes at least one of the following:
First item: The UE first evaluates CHO execution conditions of all configured candidate cells. If the CHO execution conditions of one or more candidate cells are satisfied, the UE considers that these candidate cells satisfying the execution conditions of the CHO are first candidate cells.

The UE continues to evaluate an execution condition of a candidate PSCell corresponding to each first candidate cell. If the candidate PSCell of the first candidate cell satisfies a CPAC execution condition, the UE uses the first candidate cell and the candidate PSCell associated with the first candidate cell as a group of triggering cells.

Second item: The UE evaluates CHO execution conditions of all configured candidate cells, and at the same time, the UE evaluates CPAC execution conditions of candidate PSCells corresponding to all candidate cells of CHO. When each candidate cell of the CHO and at least one candidate PSCell corresponding to the candidate cell of the CHO satisfy the CPAC execution condition, the UE uses the candidate cell that satisfies the CHO execution condition and the candidate PSCell that is associated with the candidate cell and satisfies the condition as a group of triggering cells.

Optionally, if only the CHO execution condition of a candidate cell is satisfied, and no corresponding candidate PSCell satisfies the CPAC execution condition, the UE randomly selects a candidate PCell that satisfies the execution condition as a target PCell.

If there is only one group of triggering cells, the UE performs a flow of the CHO with CPA on the triggering cells. If there are a plurality of groups of triggering cells, the UE selects any group of triggering cells and performs a flow of the CHO with CPA.

In a second specific embodiment of this application, for a candidate PSCell, when an agreement agrees/a network configures that a CPAC execution condition included in a conditional reconfiguration of CHO is A4/B1, if a candidate PSCell corresponding to the CPAC execution condition is a current serving cell, UE considers that A4/B1 means that quality of the serving cell is greater than or equal to a threshold. Namely, the UE considers that A4 is A4&A1, and B1 is B1&A1. During evaluation of an execution condition, the UE applies some or all of parameters corresponding to an execution condition associated with A4/B1 configured by the network. Details are shown in FIG. 2.

**Table 2**

| | | |
|---|---|---|
| CondEvent A4/ A4&A1 | Quality of a neighboring cell/quality of service cell is greater than or equal to a threshold | Entry condition: |
| | | For the neighboring cell: |
| | | *Mn + Ofn + Ocn - Hys > Thresh* |
| | | For the serving cell: |
| | | *Ms + Ofs + Ocs-Hys > Thresh* |
| | | or *Ms + Ofs- Hys > Thresh* or *Ms + Ocs- Hys > Thresh* or *Ms- Hys > Thresh* |
| | | Leave condition: |
| | | For the neighboring cell: |
| | | *Mn + Ofn + Ocn + Hys < Thresh* |
| | | For the serving cell: |
| | | *Ms + Ofs + Ocs + Hys < Thresh* |
| | | or *Ms + Ofs-Hys < Thresh* or *Ms + Ocs-Hys < Thresh* |
| CondEvent B1/B1&A1 | Quality of an Inter-RAT neighboring cell/serving cell is greater than or equal to a threshold | Entry condition: |
| | | For the neighboring cell: |
| | | *Mn + Ofn + Ocn - Hys > Thresh* |
| | | For the serving cell: |
| | | *Ms + Ofs + Ocs-Hys > Thresh* |
| | | or *Ms + Ofs- Hys > Thresh* or *Ms + Ocs- Hys > Thresh* or *Ms- Hys > Thresh* |
| | | Leave condition: |
| | | For the neighboring cell: |
| | | *Mn + Ofn + Ocn + Hys < Thresh* |
| | | For the serving cell: |
| | | *Ms + Ofs + Ocs + Hys < Thresh* |
| | | or *Ms + Ofs-Hys < Thresh* or *Ms + Ocs-Hys < Thresh* |

For a candidate PCell or a candidate PSCell:
When the specification agrees/the network configures that a CHO execution condition or a CPAC execution condition included in a CHO conditional reconfiguration or a CPAC conditional reconfiguration is A3/A5, if a candidate PCell corresponding to the CHO execution condition is a current serving cell, the UE considers that A3/A5 means A3&A1 or A5&A1.

**Table 3**

| | | |
|---|---|---|
| CondEvent A3/ A3&A1 | Quality of a neighboring cell/serving cell is greater than or equal to that of a SpCell | Entry condition: |
| | | For the neighboring cell: |
| | | *Mn + Ofn + Ocn - Hys > Mp + Ofp + Ocp + Off* |
| | | For the serving cell: |
| | | *Ms + Ofs+Ocs-Hys > Mp + Ofp+Ocp+off* |
| | | or *Ms + Ofs- Hys > Mp + Ofp +off* |
| | | or *Ms + Ocs- Hys > Mp +Ocp+off* |
| | | or *Ms - Hys > Mp +off* |
| | | Leave condition: |
| | | For the neighboring cell: |
| | | *Mn + Ofn + Ocn + Hys < Mp + Ofp + Ocp + Off* |
| | | For the serving cell: |
| | | *Ms + Ofs+Ocs+Hys < Mp + Ofp+Ocp+off* |
| | | or s + Ofs+ Hys < Mp + Ofp +off |
| | | or *Ms + Ocs+Hys < Mp +Ocp+off* |
| | | or *Ms + Hys < Mp+off* |
| condEventA5/ A5&A1 | Quality of the SpCell is less than or equal to threshold 1 | Entry condition: |
| | | For the neighboring cell: |
| | | *Mp + Hys < Thresh1 and Mn + Ofn + Ocn - Hys > Thresh2* |
| | Quality of the neighboring cell/serving cell is greater than or equal to threshold 2 | For the serving cell: |
| | | *p + Ofp+Ocp+Hys<Thresh1 and Ms + Ofs + Ocs +Hys > Thresh2* |
| | | or *Mp + Ofp +Hys<Thresh1 and Ms + Ofs + +Hys > Thresh2* |
| | | or *Mp+ Ocp+Hys<Thresh1 and Ms + Ocs +Hys > Thresh2* |
| | | or *Mp +Hys<Thresh1 and Ms +Hys > Thresh2* |
| | | Leave condition: |
| | | For the neighboring cell: |
| | | *Mp - Hys > Thresh1* |
| | | *And Mn + Ofn + Ocn + Hys < Thresh2* |
| | | For the serving cell: |
| | | *Mp - Hys>Thresh1 and Ms + Ofs + Ocs + Hys < Thresh2* |
| | | or *Mp - Hys>Thresh1 and Ms + Ocs + Hys < Thresh2* |
| | | or *Mp - Hys>Thresh1 and Ms + Ofs + Hys < Thresh2* |
| | | or *Mp - Hys>Thresh1 and Ms + Hys < Thresh2* |

The relevant parameters in Table 2 and Table 3 are described in the corresponding description in Table 1, and details are not elaborated here.

In a third specific embodiment of this application, a first execution condition is defined. The first execution condition is associated with a serving cell. The first execution condition is configured by a network side only in a case that the serving cell is a candidate PSCell. The first execution condition is associated with N first triggering conditions. The first triggering conditions are associated with a conditional event A1 (condEvent A1), or is associated with a condEvent A1-like conditional event (condEvent A1-like). Definitions of condEvent A1 and condEvent A 1-like are shown in Table 1.

The method of this embodiment includes:
Step 601: A source base station transmits a first message to one or more candidate base stations. The first message instructs a target base station to prepare for CHO with CPAC.
Step 602: A candidate target base station 1 (a first MN) performs access control, and the first MN selects candidate SN(s) for each associated PCell and interacts with the candidate SN(s). A node corresponding to the candidate target base station 1 is considered to be the first MN. The first MN configures corresponding CPAC configuration information for each selected PCell.

A process of interaction between the first MN and the first SN includes that the first MN transmits an SN addition request (SN Addition Request) to the first SN, and the first SN transmits an SN addition request acknowledge message (SN Addition Request Acknowledge) to the first MN.

Optionally, if a cell identification of a PSCell included in a first response message of a candidate SN (a first SN) is the same as that of the serving cell, the first MN discards configuration information of the candidate PSCell, and transmits refuse information to the candidate SN, where an indication refuse cause is the same as that of the serving cell. After receiving the refuse message, the candidate SN releases a resource corresponding to the candidate SN. The first response message includes the configuration information, transmitted by the first SN to the first MN, of the candidate PSCell.

In a fourth specific embodiment of this application, the method includes:
Step 701: A source base station transmits a first message to one or more candidate base stations. The first message instructs a target base station to prepare for CHO with CPAC.
Step 701 is the same as step 501.

If the first message includes candidate PCell(s) and/or candidate PSCell(s) recommended by the source base station, according to an agreement/network configuration/network implementation, it ensures that the recommended candidate PCell(s) and/or PSCell(s) included in the first message do/does not include a serving cell.

Step 702: A candidate MN transmits the recommended PSCell(s) to a candidate SN. When determining PSCell(s), the candidate SN can only select the candidate PSCell(s) from the recommended candidate PSCell(s) included in the first message; and/or when determining candidate PCell(s), a candidate MN corresponding to a candidate target base station can only select the candidate PCSell(s) from the recommended candidate PSCell(s) included in the first message.

In a fifth specific embodiment of this application, a second execution condition is defined. The second execution condition is associated with a serving cell. The second execution condition is configured by a network side only in a case that the serving cell is a candidate primary cell. The second execution condition is associated with N second triggering conditions. The second triggering conditions are associated with a conditional event similar to A1 (condEvent A1-like). A definition of condEvent A1-like is shown in Table 4.

**Table 4**

| | | |
|---|---|---|
| condEvent A1-like | Quality of the serving cell is greater than or equal to that of a SpCell | Entry condition: *Ms + Ofs+Ocs- Hys > Mp + Ofp+Ocp+off* |
| | | or *Ms + Ofs- Hys > Mp + Ofp +off* |
| | | or *Ms + Ocs-Hys > Mp +Ocp+off* |
| | | or *Ms - Hys > Mp +off* |
| | | Leave condition: *Ms* + *Ofs+Ocs+Hys < Mp + Ofp+Ocp+off* |
| | | or s + Ofs+ Hys < Mp + Ofp +off |
| | | or *Ms + Ocs+Hys < Mp +Ocp+off* |
| | | or *Ms + Hys < Mp+off* |
| condEventA1-like | Quality of the SpCell is less than or equal to threshold 1 | Entry condition: *p + Ofp+Ocp+Hys<Thresh1 and Ms + Ofs + Ocs +Hys > Thresh2* |
| | | or *Mp + Ofp +Hys<Thresh1 and Ms + Ofs + +Hys > Thresh2* |
| | The quality of the serving cell is greater than or equal to a threshold 2 | or *Mp+ Ocp+Hys<Thresh1 and Ms + Ocs +Hys > Thresh2* |
| | | or *Mp +Hys<Thresh1 and Ms +Hys > Thresh2* |
| | | Leave condition: *Mp - Hys>Thresh1 and Ms + Ofs + Ocs + Hys < Thresh2* |
| | | or *Mp - Hys>Thresh1 and Ms + Ocs + Hys < Thresh2* |
| | | or *Mp - Hys>Thresh1 and Ms + Ofs + Hys < Thresh2* |
| | | or *Mp - Hys>Thresh1 and Ms + Hys < Thresh2* |

Ms represents a measurement result of the serving cell (candidate PCell) (no offset is considered).

Mp represents a measurement result of the SpCell (no offset is considered).

Mn represents a measurement result of the neighboring cell (no offset is considered).

Ofs represents a serving cell measurement event offset, and Ocs represents a serving-cell-specific offset, both of which are configured by an RRC. Ofs and Ocs are set to 0 if they are not configured by the RRC.

Ofp represents a primary cell measurement event offset, and Ocp represents a primary-cell-specific offset, both of which are configured by an RRC. Ofs and Ocs are set to 0 if they are not configured by the RRC.

Ofn represents a neighboring cell measurement event offset, and Ocn represents a neighboring-cell-specific offset, both of which are configured by the RRC. Ofs and Ocs are set to 0 if they are not configured by the RRC.

Hys represents a hysteresis parameter of this event, and is configured by the RRC. Off represents an offset parameter of this event, and is configured by the RRC.

For an RSRP, Ms and Mp are represented in dBm, or for an RSRQ and an RS-SINR, Ms and Mp are represented in dB. Ofs, Ocs, Hys, Ofp, Ocp, and off are represented in dB, and Thresh is represented in a unit that is the same as Ms/Mp.

The method includes:
Step 801: A source base station transmits a first message to one or more candidate base stations, to request to prepare for CHO with CPAC or prepare for CHO.
Step 802: A candidate target base station performs access control. The candidate target base station transmits a CHO request to a candidate PCell controlled by the candidate target base station, and configures an execution condition for each candidate PCell:
   If a cell identification of the candidate PCell is the same as that of the serving cell, the candidate target base station determines the execution condition corresponding to the candidate PCell to be a second execution condition.

In this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

An executive body for the conditional configuration information processing method according to the embodiments of this application may be a conditional configuration information processing apparatus. In the embodiments of this application, using the conditional configuration information processing apparatus to perform the conditional configuration information processing method is taken as an example to explain the conditional configuration information processing apparatus provided by the embodiments of this application.

As shown in FIG. 6, the embodiments of this application further provide a conditional configuration information processing apparatus 600, applied to a terminal and including:
a first obtaining module 601, configured to obtain at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; the candidate primary cell includes a serving cell of the terminal and/or the candidate PSCell includes the serving cell of the terminal; and
a first determining module 602, configured to determine a target execution condition of the conditional handover and/or a target CPAC execution condition according to the first configuration information.

Optionally, in a case that the candidate PSCell corresponding to the candidate primary cell is the same as the serving cell of the terminal, the CPAC execution condition corresponding to the candidate PSCell is a first execution condition;
where the first execution condition is associated with a first triggering condition; and the first triggering condition includes at least one of the following:
quality of a serving cell included in conditional configuration information is greater than or equal to a first threshold;
the quality of the serving cell included in the conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, in a case that the candidate primary cell is the same as the serving cell of the terminal, the execution condition of the conditional handover corresponding to the candidate primary cell is a second execution condition;
where the second execution condition is associated with a second triggering condition; and the second triggering condition includes at least one of the following:
quality of a serving cell included in conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, the first determining module is configured to: in a case that a triggering condition associated with the CPAC execution condition is a third triggering condition, and the candidate PSCell corresponding to the CPAC execution condition is a serving cell, determine that a triggering condition associated with the target CPAC execution condition is a fourth triggering condition;
where the third triggering condition includes at least one of the following: quality of a candidate neighboring cell included in conditional configuration information is greater than or equal to a fifth threshold;
quality of different Inter-radio access technology (Inter-RAT) neighboring cells included in the conditional configuration information is greater than or equal to a sixth threshold;
the quality of the candidate neighboring cell included in the conditional configuration information is greater than or equal to quality of a special cell (SpCell); and
the quality of the SpCell is less than or equal to a seventh threshold and the quality of the candidate neighboring cell included in the conditional configuration information is greater than or equal to an eighth threshold;
the fourth triggering condition includes at least one of the following:
   quality of a serving cell included in the conditional configuration information is greater than or equal to the fifth threshold or the sixth threshold;
   the quality of the serving cell included in the conditional configuration information is greater than or equal to the quality of the special cell (SpCell);
   the quality of the SpCell is less than or equal to the seventh threshold and the quality of the serving cell included in the conditional configuration information is greater than or equal to the eighth threshold; and
   the conditional configuration information includes a group of first configuration information and an execution condition of corresponding conditional handover.

Optionally, the first determining module is configured to: in a case that a triggering condition associated with the execution condition of the conditional handover is a fifth triggering condition, and the candidate primary cell corresponding to the execution condition of the conditional handover is a serving cell, determine that the triggering condition associated with the execution condition of the conditional handover is a sixth triggering condition;
where the fifth triggering condition includes at least one of the following:
quality of a candidate neighboring cell included in conditional configuration information is greater than or equal to quality of a special cell (SpCell); and
the quality of the SpCell is less than or equal to a ninth threshold and the quality of the candidate neighboring cell included in the conditional configuration information is greater than or equal to a tenth threshold;
the sixth triggering condition includes at least one of the following:
   quality of a serving cell included in the conditional configuration information is greater than or equal to the quality of the special cell (SpCell);
   the quality of the SpCell is less than or equal to the ninth threshold and the quality of the serving cell included in the conditional configuration information is greater than or equal to a tenth threshold; and
   the conditional configuration information includes a group of first configuration information and an execution condition of corresponding conditional handover.

According to the apparatus of this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

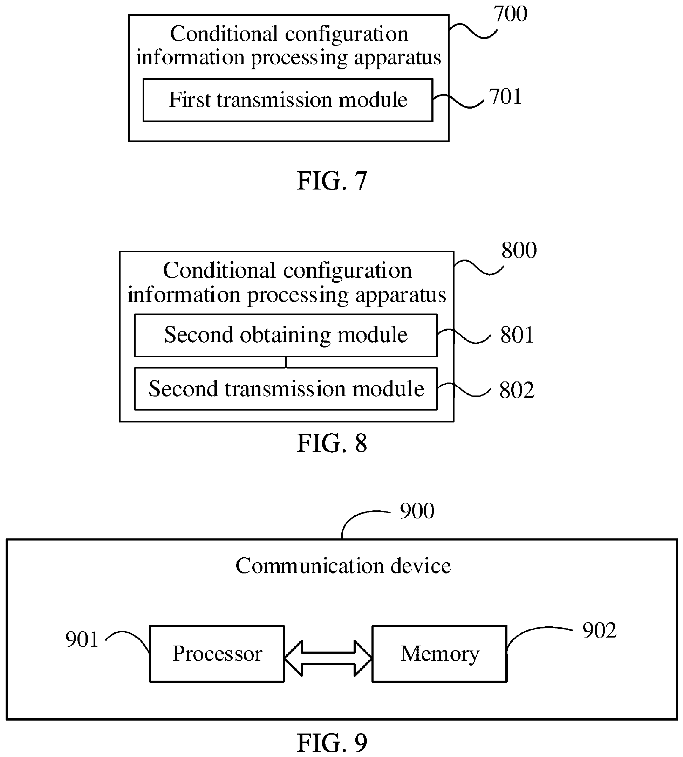

As shown in FIG. 7, the embodiments of this application further provide a conditional configuration information processing apparatus 700, applied to a first network side device and including:
a first transmission module 701, configured to transmit at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

Optionally, in a case that the candidate PSCell corresponding to the candidate primary cell is the same as the serving cell of the terminal, the CPAC execution condition corresponding to the candidate PSCell is a first execution condition;
where the first execution condition is associated with a first triggering condition; and the first triggering condition includes at least one of the following:
quality of a serving cell included in conditional configuration information is greater than or equal to a first threshold;
the quality of the serving cell included in the conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, in a case that the candidate primary cell is the same as the serving cell of the terminal, the first network side device configures the execution condition of the conditional handover corresponding to the candidate primary cell to be a second execution condition;
where the second execution condition is associated with a second triggering condition; and the second triggering condition includes at least one of the following:
quality of a serving cell included in conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, the apparatus according to this embodiment of this application further includes:
a third transmission module, configured to send a first message to a target base station before the first transmission module transmits the at least one group of first configuration information and the execution condition of the conditional handover, where the first message is used for instructing the target base station to prepare for conditional handover;
a third obtaining module, configured to obtain a first response message transmitted by the target base station, where the first response message includes the at least one group of first configuration information; and
a fourth obtaining module, configured to obtain the at least one group of first configuration information according to the first response message.

Optionally, the first message includes a candidate cell recommended by the first network side device. The recommended candidate cell includes at least one of a candidate primary cell and a candidate PSCell. The candidate cell is different from the serving cell of the terminal.

Optionally, at least one of the candidate primary cell in each group of first configuration information transmitted by the target base station and the candidate PSCell corresponding to the candidate primary cell is selected by a second network side device from the candidate cell recommended by the first network side device.

The second network side device includes at least one of the target base station, a candidate MN corresponding to the target base station, and a candidate SN determined by the candidate MN corresponding to the target base station.

Optionally, the apparatus according to this embodiment of this application further includes:
a first processing module, configured to: after the third obtaining module obtains the first response message transmitted by the target base station, in a case that at least one of the candidate primary cell in target first configuration information included in the first response message and the candidate PSCell corresponding to the candidate primary cell is the serving cell, discard the first response message, or discard the target first configuration information in the first response message.

Optionally, the apparatus according to this embodiment of this application further includes:
a second processing module, configured to: after the fourth obtaining module obtains the at least one group of first configuration information according to the first response message, in a case that a first candidate primary cell in the first configuration information is the same as the serving cell of the terminal, not configure an execution condition of conditional handover for the first candidate primary cell, and transmit refuse information to a third network side device, where the refuse information is used for instructing the third network side device to release a resource.

The third network side device includes a candidate MN corresponding to the target base station.

In this embodiment of this application, the first network side device transmits at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

As shown in FIG. 8, the embodiments of this application further provide a conditional configuration information processing apparatus 800, applied to a third network side device and including:
a second obtaining module 801, configured to obtain a first message transmitted by a first network side device, where the first message is used for instructing the third network side device to prepare for conditional handover; and
a second transmission module 802, configured to transmit a first response message to the first network side device according to the first message, wherein the first response message includes at least one group of first configuration information; where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

Optionally, the second transmission module includes:
a first selection submodule, configured to select at least one candidate primary cell according to the first message;
a first configuration submodule, configured to configure CPAC configuration information for a candidate PSCell corresponding to each selected candidate primary cell;
a first obtaining submodule, configured to obtain at least one group of first configuration information according to the configuration information of the candidate primary cell, the configuration information of the candidate PSCell corresponding to the candidate primary cell, and the CPAC configuration information; and
a first transmission submodule, configured to transmit, to the first network side device, the first response message carrying the first configuration information.

Optionally, the first message includes a candidate cell recommended by the first network side device. The recommended candidate cell includes at least one of a candidate primary cell and a candidate PSCell. The candidate cell is different from the serving cell of the terminal.

The first selection submodule is configured to select the candidate primary cell from the candidate cell recommended by the first network side device.

Optionally, the first configuration submodule is configured to: in a case that the candidate PSCell corresponding to the candidate primary cell is different from the serving cell of the terminal, configure the CPAC configuration information for the candidate PSCell corresponding to the candidate primary cell.

Optionally, the first message includes identification information of the serving cell of the terminal. The second transmission module further includes:
a first processing submodule, configured to: after the first selection submodule selects the at least one candidate primary cell according to the first message, in a case that a second candidate PSCell corresponding to the candidate primary cell is the same as the serving cell of the terminal, not configure CPAC configuration information for the second candidate PSCell, and transmit release information to a candidate SN corresponding to the second candidate PSCell, where the release information is used for instructing the candidate SN corresponding to the second candidate PSCell to release a resource.

In this embodiment of this application, the third network side device obtains a first message transmitted by a first network side device. The third network side device transmits a first response message to the first network side device according to the first message, so that the first network side device transmits at least one group of first configuration information and an execution condition of conditional handover to the terminal according to the first response message. The terminal determines a target execution condition of the conditional handover and/or a target CPAC execution condition according to the first configuration information, namely, determines the target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

The conditional configuration information processing apparatus of this embodiment of this application may be an electronic device, for example, an electronic device having an operating system, or a component in an electronic device, such as an integrated circuit or a chip. The electronic device may be a terminal or another device except a terminal. Exemplarily, the terminal may include, but is not limited to, the types of the terminal 11 listed above, and the other device may be a server, a network attached storage (Network Attached Storage, NAS), or the like. The embodiments of this application do not impose a specific limitation on this.

The conditional configuration information processing apparatus according to this embodiment of this application can implement the processes implemented by the method embodiment shown in FIG. 2 to FIG. 5 and achieve the same technical effects, details of which are omitted here for brevity.

Optionally, as shown in FIG. 9, the embodiments of this application further provide a communication device 900, including a processor 901 and a memory 902. The memory 902 stores a program or an instruction executable on the processor 901. For example, when the communication device 900 is a terminal, the program or the instruction, when executed by the processor 901, implements the steps of the conditional configuration information processing method embodiment performed by the above terminal, and can achieve the same technical effects. When the communication device 900 is a network side device, the program or the instruction, when executed by the processor 901, implements the steps of the conditional configuration information processing method embodiment performed by the first network side device or the third network side device, and can achieve the same technical effects, details of which are omitted here for brevity.

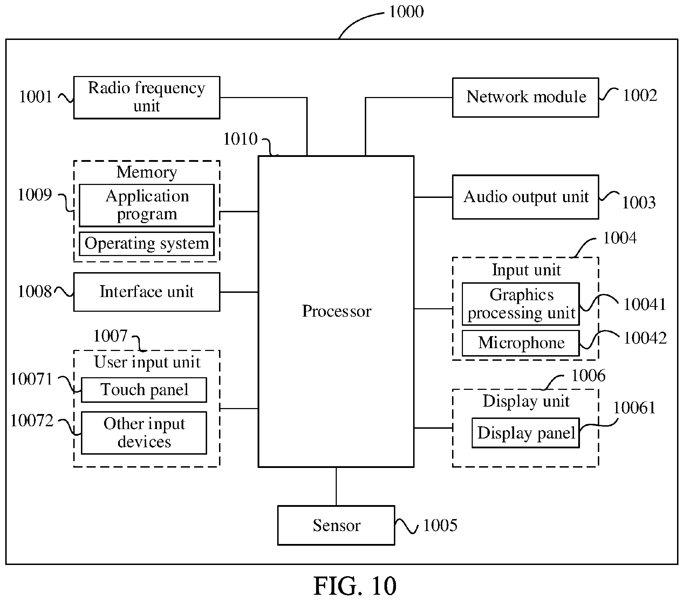

The embodiments of this application further provide a terminal, including a processor and a communication interface. The communication interface is configured to obtain at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; the candidate primary cell includes a serving cell of the terminal and/or the candidate PSCell includes the serving cell of the terminal. The processor is configured to determine a target execution condition of the conditional handover and/or a target CPAC execution condition according to the first configuration information. The terminal embodiment corresponds to the terminal side method embodiment described above. The implementation processes and implementations of the above method embodiment can be applied to the terminal embodiment and can achieve the same technical effects. Specifically, FIG. 10 is a schematic structural diagram of hardware of a terminal for implementing the embodiments of this application.

The terminal 1000 includes, but is not limited to: at least some of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Those skilled in the art can understand that the terminal 1000 further includes a power supply (such as a battery) for supplying power to the components. The power supply may be logically connected to the processor 1010 by using a power management system, thereby implementing functions such as charging, discharging, and power consumption management by using the power management system. The structures of the terminal shown in FIG. 10 constitute no limitation on the terminal, and the terminal may include more or fewer components than those shown in the figure, or some components may be combined, or a different component deployment may be used, details of which are omitted here.

It should be understood that in the embodiments of this application, the input unit 1004 may include a graphics processing unit (Graphics Processing Unit, GPU) 10041 and a microphone 10042, and the GPU 10041 processes image data of static pictures or videos obtained by an image capturing apparatus (such as a camera) in a video capturing mode or an image capturing mode. The display unit 1006 may include a display panel 10061, and the display panel 10061 may be configured by using a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but not limited to, a physical keyboard, a function key (such as a volume control key or a switch key), a track ball, a mouse, and a joystick, which is not described herein again.

In the embodiments of this application, the radio frequency unit 1001 receives downlink data from a network side device and can transmit the data to the processor 1010 for processing. In addition, the radio frequency unit 1001 may transmit uplink data to the network side device. Generally, the radio frequency unit 1001 includes, but is not limited to, an antenna, an amplifier, a transceiver, a coupler, a low noise amplifier, a duplexer, and the like.

The memory 1009 may be configured to store a software program or an instruction and various data. The memory 1009 may mainly include a first storage area for storing a program or instructions, and a second storage area for storing data. The first storage area may store an operating system, an application program or instructions required by at least one function (for example, a sound playing function and an image display function), and the like. The memory 1009 may be a volatile memory or a non-volatile memory, or the memory 1009 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The memory 1009 in the embodiments of this application includes these and any other suitable types of memories.

The processor 1010 may include one or more processing units. Optionally, the processor 1010 may integrate an application processor and a modem processor, wherein the application processor mainly processes operations involving an operating system, a user interface, an application program, and the like, and the modem processor mainly processes a wireless communication signal, such as a baseband processor. It can be understood that, the above modem processor may not be integrated into the processor 1010.

The radio frequency unit 1001 is configured to obtain at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of the terminal and/or the candidate PSCell includes the serving cell of the terminal.

The processor 1010 is configured to determine a target execution condition of the conditional handover and/or a target CPAC execution condition according to the first configuration information.

In this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the target execution condition and/or the target CPAC execution condition corresponding to the serving cell of the terminal, thereby achieving a purpose of correctly processing the execution condition corresponding to the serving cell.

Optionally, in a case that the candidate PSCell corresponding to the candidate primary cell is the same as the serving cell of the terminal, the CPAC execution condition corresponding to the candidate PSCell is a first execution condition;
where the first execution condition is associated with a first triggering condition; and the first triggering condition includes at least one of the following:
quality of a serving cell included in conditional configuration information is greater than or equal to a first threshold;
the quality of the serving cell included in the conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, in a case that the candidate primary cell is the same as the serving cell of the terminal, the execution condition of the conditional handover corresponding to the candidate primary cell is a second execution condition;
where the second execution condition is associated with a second triggering condition; and the second triggering condition includes at least one of the following:
quality of a serving cell included in conditional configuration information is greater than or equal to quality of a special cell (SpCell);
the quality of the SpCell is less than or equal to a third threshold and the quality of the serving cell included in the conditional configuration information is greater than or equal to a fourth threshold; and
the conditional configuration information includes a group of first configuration information and an execution condition of corresponding conditional handover.

Optionally, the processor 1010 is further configured to: in a case that a triggering condition associated with the CPAC execution condition is a third triggering condition, and the candidate PSCell corresponding to the CPAC execution condition is a serving cell, determine that a triggering condition associated with the target CPAC execution condition is a fourth triggering condition;
where the third triggering condition includes at least one of the following: quality of a candidate neighboring cell included in conditional configuration information is greater than or equal to a fifth threshold;
quality of different Inter-radio access technology (Inter-RAT) neighboring cells included in the conditional configuration information is greater than or equal to a sixth threshold;
the quality of the candidate neighboring cell included in the conditional configuration information is greater than or equal to quality of a special cell (SpCell); and
the quality of the SpCell is less than or equal to a seventh threshold and the quality of the candidate neighboring cell included in the conditional configuration information is greater than or equal to an eighth threshold;
the fourth triggering condition includes at least one of the following:
   quality of a serving cell included in the conditional configuration information is greater than or equal to the fifth threshold or the sixth threshold;
   the quality of the serving cell included in the conditional configuration information is greater than or equal to the quality of the special cell (SpCell);
   the quality of the SpCell is less than or equal to the seventh threshold and the quality of the serving cell included in the conditional configuration information is greater than or equal to the eighth threshold; and
   the conditional configuration information includes a group of first configuration information and an execution condition of corresponding conditional handover.

Optionally, the processor 1010 is further configured to: in a case that a triggering condition associated with the execution condition of the conditional handover is a fifth triggering condition, and the candidate primary cell corresponding to the execution condition of the conditional handover is a serving cell, determine that the triggering condition associated with the execution condition of the conditional handover is a sixth triggering condition;
where the fifth triggering condition includes at least one of the following:
quality of a candidate neighboring cell included in conditional configuration information is greater than or equal to quality of a special cell (SpCell); and
the quality of the SpCell is less than or equal to a ninth threshold and the quality of the candidate neighboring cell included in the conditional configuration information is greater than or equal to a tenth threshold;
the sixth triggering condition includes at least one of the following:
   quality of a serving cell included in the conditional configuration information is greater than or equal to the quality of the special cell (SpCell);
   the quality of the SpCell is less than or equal to the ninth threshold and the quality of the serving cell included in the conditional configuration information is greater than or equal to a tenth threshold; and
   the conditional configuration information includes a group of first configuration information and an execution condition of corresponding conditional handover.

In this embodiment of this application, a terminal obtains at least one group of first configuration information and an execution condition of conditional handover. A candidate primary cell in the first configuration information includes a serving cell of the terminal and/or a candidate PSCell in the first configuration information includes the serving cell of the terminal. The terminal determines a target execution condition of the conditional handover and/or a target CPAC execution condition according to the first configuration information, namely, determines the corresponding target execution condition and/or the target CPAC execution condition when the serving cell of the terminal is used as a candidate cell, thereby achieving a purpose of correctly processing the corresponding execution condition when the serving cell is used as the candidate primary cell or the candidate PSCell.

The embodiments of this application further provide a network side device, including a processor and a communication interface. The communication interface is configured to transmit at least one group of first configuration information and an execution condition of conditional handover, where each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of the terminal and/or the candidate PSCell includes the serving cell of the terminal. The network side device embodiment corresponds to the above first network side device method embodiment, and the implementation processes and implementations of the above method embodiment can be applied to the network side device embodiment, and can achieve the same technical effects.

The embodiments of this application further provide a network side device, including a processor and a communication interface. The communication interface is configured to: obtain a first message transmitted by a first network side device, where the first message is used for instructing a third network side device to prepare for conditional handover; and transmit a first response message to the first network side device according to the first message, where the first response message includes at least one group of first configuration information. Each group of first configuration information includes a group of configuration information of a candidate primary cell of conditional handover and/or at least one group of conditional PSCell addition/change (CPAC) configuration information; each group of CPAC configuration information includes configuration information of a candidate PSCell corresponding to the candidate primary cell and a CPAC execution condition corresponding to the configuration information of the candidate PSCell; and the candidate primary cell includes a serving cell of a terminal and/or the candidate PSCell includes the serving cell of the terminal.

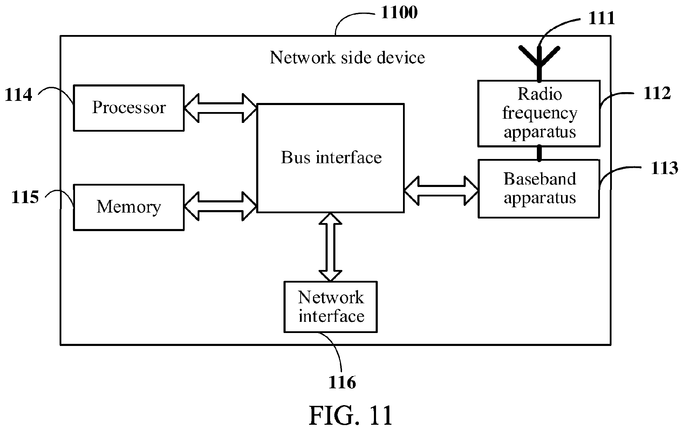

Specifically, the embodiments of this application provide a network side device. As shown in FIG. 11, the network side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111 and sends the received information to the baseband apparatus 113 for processing. In a downlink direction, the baseband apparatus 113 processes information to be sent and sends the information to the radio frequency apparatus 112, and the radio frequency apparatus 112 processes the received information and sends the information via the antenna 111.

The method performed by the network side device in the above embodiment may be implemented in the baseband apparatus 113, and the baseband apparatus 113 includes a baseband processor.

The baseband apparatus 113 may include, for example, at least one baseband board. A plurality of chips are arranged on the baseband board. As shown in FIG. 11, one of the chips is, for example, a baseband processor, connected to the memory 115 through a bus interface to call a program in the memory 115 to perform the operations of the network device shown in the above method embodiment.

The network side device may further include a network interface 116. The interface is, for example, a common public radio interface (common public radio interface, CPRI).

Specifically, the network side device 1100 of the embodiments of this application further includes: an instruction or a program stored on the memory 115 and runnable on the processor 114. The processor 114 calls the instruction or the program in the memory 115 to perform the method performed by the modules shown in FIG. 7 or FIG. 8 and achieve the same technical effects, details of which are omitted here for brevity.

The embodiments of this application further provide a readable storage medium. The readable storage medium stores a program or an instruction. The program or the instruction, when executed by a processor, implements the processes of the above conditional configuration information processing method embodiment and can achieve the same technical effects, details of which are omitted here for brevity.

The processor is the processor in the terminal in the embodiments described above. The readable storage medium includes a computer-readable storage medium, for example, a computer read-only memory (ROM), a random access memory (RAM), a magnetic disc, a compact disc, or the like.

The embodiments of this application further provide a chip. The chip includes a processor and a communication interface. The communication interface is coupled to the processor. The processor is configured to run a program or an instruction to implement the processes of the above conditional configuration information processing method embodiment, and can achieve the same technical effects, details of which are omitted here for brevity.

It should be understood that the chip mentioned in the embodiments of this application can alternatively be referred to as a system chip, a chip system, or a system-on-chip.

The embodiments of this application further provide a computer program/program product. The computer program/program product is stored in a storage medium. The computer program/program product, when run by at least one processor, implements the processes of the above conditional configuration information processing method embodiment, and can achieve the same technical effects, details of which are omitted here for brevity.

The embodiments of this application further provide a conditional configuration information processing system, including: a terminal and a network side device. The terminal can be configured to execute the steps of the above conditional configuration information processing method performed by a terminal, and the network side device can be configured to execute the steps of the above conditional configuration information processing method performed by a first network side device or a third network side device.

It should be noted that, the terms "include", "comprise", or any other variations thereof herein are intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to executing functions in the order shown or discussed, but may alternatively include executing functions in a substantially simultaneous manner or in an opposite order according to the functions involved. For example, the methods described may be executed in a different order than that described, and steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially or parts contributing to the related art may be implemented in a form of a computer software product. The computer software product is stored in a storage medium (such as a ROM/RAM, a magnetic disk, or a CD) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific implementations described above, and the specific implementations described above are merely examples and not limitative. Those of ordinary skill in the art may make many forms under the teaching of this application without departing from the spirit of this application and the protection scope of the claims, and these forms shall all fall within the protection of this application.

## Claims

1. A conditional configuration information processing method, comprising:
obtaining, by a terminal, at least one group of first configuration information and an execution condition of conditional handover, wherein each group of first configuration information comprises a group of configuration information of a candidate primary cell of conditional handover and/or at least one group of conditional PSCell addition/change (CPAC) configuration information; each group of CPAC configuration information comprises configuration information of a candidate primary Secondary Cell Group cell (PSCell) corresponding to the candidate primary cell and a CPAC execution condition corresponding to the configuration information of the candidate PSCell; the candidate primary cell comprises a serving cell of the terminal and/or the candidate PSCell comprises the serving cell of the terminal; and
determining, by the terminal, a target execution condition of the conditional handover and/or a target CPAC execution condition according to the first configuration information.

2. The method according to claim 1, wherein in a case that the candidate PSCell corresponding to the candidate primary cell is the same as the serving cell of the terminal, the CPAC execution condition corresponding to the candidate PSCell is a first execution condition;
wherein the first execution condition is associated with a first triggering condition; and the first triggering condition comprises at least one of the following:
quality of the serving cell comprised in conditional configuration information is greater than or equal to a first threshold;
the quality of the serving cell comprised in the conditional configuration information is greater than or equal to quality of a special cell (SpCell);
the quality of the SpCell is less than or equal to a third threshold and the quality of the serving cell comprised in the conditional configuration information is greater than a fourth threshold; and
the conditional configuration information comprises a group of first configuration information and an execution condition of corresponding conditional handover.

3. The method according to claim 1, wherein in a case that the candidate primary cell is the same as the serving cell of the terminal, the execution condition of conditional handover corresponding to the candidate primary cell is a second execution condition;
wherein the second execution condition is associated with a second triggering condition; and the second triggering condition comprises at least one of the following:
quality of a serving cell comprised in conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

4. The method according to claim 1, wherein the determining, by the terminal, a target CPAC execution condition according to the first configuration information comprises:
in a case that a triggering condition associated with the CPAC execution condition is a third triggering condition, and the candidate PSCell corresponding to the CPAC execution condition is a serving cell, determining that a triggering condition associated with the target CPAC execution condition is a fourth triggering condition;
wherein the third triggering condition comprises at least one of the following: quality of a candidate neighboring cell comprised in conditional configuration information is greater than or equal to a fifth threshold;
quality of different Inter-radio access technology (Inter-RAT) neighboring cells comprised in the conditional configuration information is greater than or equal to a sixth threshold;
the quality of the candidate neighboring cell comprised in the conditional configuration information is greater than or equal to quality of a special cell (SpCell); and
the quality of the SpCell is less than or equal to a seventh threshold and the quality of the candidate neighboring cell comprised in the conditional configuration information is greater than or equal to an eighth threshold;
the fourth triggering condition comprises at least one of the following:
quality of a serving cell comprised in the conditional configuration information is greater than or equal to the fifth threshold or the sixth threshold;
the quality of the serving cell comprised in the conditional configuration information is greater than or equal to quality of a special cell (SpCell);
the quality of the SpCell is less than or equal to the seventh threshold and the quality of the serving cell comprised in the conditional configuration information is greater than or equal to the eighth threshold; and
the conditional configuration information comprises a group of first configuration information and an execution condition of corresponding conditional handover.

5. The method according to claim 1, wherein the determining, by the terminal, a target execution condition of the conditional handover according to the first configuration information comprises:
in a case that a triggering condition associated with the execution condition of the conditional handover is a fifth triggering condition, and the candidate primary cell corresponding to the execution condition of the conditional handover is a serving cell, determining that the triggering condition associated with the target execution condition of the conditional handover is a sixth triggering condition;
wherein the fifth triggering condition comprises at least one of the following:
quality of a candidate neighboring cell comprised in conditional configuration information is greater than or equal to quality of a special cell (SpCell); and
the quality of the SpCell is less than or equal to a ninth threshold and the quality of the candidate neighboring cell comprised in the conditional configuration information is greater than or equal to a tenth threshold;
the sixth triggering condition comprises at least one of the following:
quality of a serving cell comprised in the conditional configuration information is greater than or equal to quality of a special cell (SpCell);
the quality of the SpCell is less than or equal to the ninth threshold and the quality of the serving cell comprised in the conditional configuration information is greater than or equal to a tenth threshold; and
the conditional configuration information comprises a group of first configuration information and an execution condition of corresponding conditional handover.

6. The method according to claim 1, wherein after the determining, by the terminal, a target execution condition of the conditional handover and/or a target CPAC execution condition according to the first configuration information, the method further comprises:
performing, by the terminal, conditional evaluation according to the target execution condition and/or the target CPAC execution condition.

7. A conditional configuration information processing method, comprising:
transmitting, by a first network side device, at least one group of first configuration information and an execution condition of conditional handover, wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; and the candidate primary cell comprises a serving cell of a terminal and/or the candidate PSCell comprises the serving cell of the terminal.

8. The method according to claim 7, wherein in a case that the candidate PSCell corresponding to the candidate primary cell is the same as the serving cell of the terminal, the CPAC execution condition corresponding to the candidate PSCell is a first execution condition;
wherein the first execution condition is associated with a first triggering condition; and the first triggering condition comprises at least one of the following:
quality of a serving cell comprised in conditional configuration information is greater than or equal to a first threshold;
the quality of the serving cell comprised in the conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

9. The method according to claim 7, wherein in a case that the candidate primary cell is the same as the serving cell of the terminal, the first network side device configures the execution condition of the conditional handover corresponding to the candidate primary cell to be a second execution condition;
wherein the second execution condition is associated with a second triggering condition; and the second triggering condition comprises at least one of the following:
quality of a serving cell comprised in the conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

10. The method according to claim 7, wherein before the transmitting, by a first network side device, at least one group of first configuration information and an execution condition of conditional handover, the method further comprises:
transmitting, by the first network side device, a first message to a target base station, wherein the first message is used for instructing the target base station to prepare for conditional handover;
obtaining a first response message transmitted by the target base station, wherein the first response message comprises the at least one group of first configuration information; and
obtaining the at least one group of first configuration information according to the first response message.

11. The method according to claim 10, wherein the first message comprises a candidate cell recommended by the first network side device; the recommended candidate cell comprises at least one of a candidate primary cell and a candidate PSCell; and the candidate cell is different from the serving cell of the terminal.

12. The method according to claim 11, at least one of the candidate primary cell in each group of first configuration information transmitted by the target base station and the candidate PSCell corresponding to the candidate primary cell is selected by a second network side device from the candidate cell recommended by the first network side device; and
wherein the second network side device comprises at least one of the target base station, a candidate master node (MN) corresponding to the target base station, and a candidate secondary node (SN) determined by the candidate MN corresponding to the target base station.

13. The method according to claim 11, wherein after the obtaining a first response message transmitted by the target base station, the method further comprises:
in a case that at least one of the candidate primary cell in target first configuration information comprised in the first response message and the candidate PSCell corresponding to the candidate primary cell is the serving cell, discarding, by the first network side device, the first response message, or discarding, by the first network side device, the target first configuration information in the first response message.

14. The method according to claim 10, wherein after the obtaining the at least one group of first configuration information according to the first response message, the method further comprises:
in a case that a first candidate primary cell in the first configuration information is the same as the serving cell of the terminal, not configuring, by the first network side device, an execution condition of conditional handover for the first candidate primary cell, and transmitting refuse information to a third network side device, wherein the refuse information is used for instructing the third network side device to release a resource; and
wherein the third network side device comprises a candidate MN corresponding to the target base station.

15. A conditional configuration information processing method, comprising:
obtaining, by a third network side device, a first message transmitted by a first network side device, wherein the first message is used for instructing the third network side device to prepare for conditional handover; and
transmitting, by the third network side device, a first response message to the first network side device according to the first message, wherein the first response message comprises at least one group of first configuration information; wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; and the candidate primary cell comprises a serving cell of a terminal and/or the candidate PSCell comprises the serving cell of the terminal.

16. The method according to claim 15, wherein the transmitting, by the third network side device, a first response message to the first network side device according to the first message comprises:
selecting, by the third network side device, at least one candidate primary cell according to the first message;
configuring, by the third network side device, CPAC configuration information for a candidate PSCell corresponding to each selected candidate primary cell;
obtaining at least one group of first configuration information according to the configuration information of the candidate primary cell, the configuration information of the candidate PSCell corresponding to the candidate primary cell, and the CPAC configuration information; and
transmitting, to the first network side device, the first response message carrying the first configuration information.

17. The method according to claim 16, wherein the first message comprises a candidate cell recommended by the first network side device; the recommended candidate cell comprises at least one of a candidate primary cell and a candidate PSCell; the candidate cell is different from the serving cell of the terminal; and
the selecting at least one candidate primary cell comprises:
selecting the candidate primary cell from the candidate cell recommended by the first network side device.

18. The method according to claim 16, wherein configuring, by the third network side device, CPAC configuration information for a candidate PSCell corresponding to each selected candidate primary cell comprises:
in a case that the candidate PSCell corresponding to the candidate primary cell is different from the serving cell of the terminal, configuring, by the third network side device, the CPAC configuration information for the candidate PSCell corresponding to the candidate primary cell.

19. The method according to claim 16, wherein the first message comprises identification information of the serving cell of the terminal; and
after the selecting, by the third network side device, at least one candidate primary cell according to the first message, the method further comprises:
in a case that a second candidate PSCell corresponding to the candidate primary cell is the same as the serving cell of the terminal, not configuring, by the third network side device, CPAC configuration information for the second candidate PSCell, and transmitting release information to a candidate SN corresponding to the second candidate PSCell, wherein the release information is used for instructing the candidate SN corresponding to the second candidate PSCell to release a resource.

20. A conditional configuration information processing apparatus, applied to a terminal and comprising:
a first obtaining module, configured to obtain at least one group of first configuration information and an execution condition of conditional handover, wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; the candidate primary cell comprises a serving cell of the terminal and/or the candidate PSCell comprises the serving cell of the terminal; and
a first determining module, configured to determine a target execution condition of the conditional handover and/or a target CPAC execution condition according to the first configuration information.

21. The apparatus according to claim 20, wherein in a case that the candidate PSCell corresponding to the candidate primary cell is the same as the serving cell of the terminal, the CPAC execution condition corresponding to the candidate PSCell is a first execution condition;
wherein the first execution condition is associated with a first triggering condition; and the first triggering condition comprises at least one of the following:
quality of a serving cell comprised in conditional configuration information is greater than or equal to a first threshold;
the quality of the serving cell comprised in the conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

22. The apparatus according to claim 20, wherein in a case that the candidate primary cell is the same as the serving cell of the terminal, the execution condition of the conditional handover corresponding to the candidate primary cell is a second execution condition;
wherein the second execution condition is associated with a second triggering condition; and the second triggering condition comprises at least one of the following:
quality of a serving cell comprised in the conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

23. The apparatus according to claim 20, wherein the first determining module is configured to: in a case that a triggering condition associated with the CPAC execution condition is a third triggering condition, and the candidate PSCell corresponding to the CPAC execution condition is a serving cell, determine that a triggering condition associated with the target CPAC execution condition is a fourth triggering condition;
wherein the third triggering condition comprises at least one of the following: quality of a candidate neighboring cell comprised in conditional configuration information is greater than or equal to a fifth threshold;
quality of different Inter-radio access technology (Inter-RAT) neighboring cells comprised in the conditional configuration information is greater than or equal to a sixth threshold;
the quality of the candidate neighboring cell comprised in the conditional configuration information is greater than or equal to quality of a special cell (SpCell); and
the quality of the SpCell is less than or equal to a seventh threshold and the quality of the candidate neighboring cell comprised in the conditional configuration information is greater than or equal to an eighth threshold;
the fourth triggering condition comprises at least one of the following: quality of a serving cell comprised in the conditional configuration information is greater than or equal to the fifth threshold or the sixth threshold; the quality of the serving cell comprised in the conditional configuration information is greater than or equal to quality of a special cell (SpCell); the quality of the SpCell is less than or equal to the seventh threshold and the quality of the serving cell comprised in the conditional configuration information is greater than or equal to the eighth threshold; and the conditional configuration information comprises a group of first configuration information and an execution condition of corresponding conditional handover.

24. The apparatus according to claim 20, wherein the first determining module is configured to: in a case that a triggering condition associated with the execution condition of the conditional handover is a fifth triggering condition, and the candidate primary cell corresponding to the execution condition of the conditional handover is a serving cell, determine that the triggering condition associated with the execution condition of the conditional handover is a sixth triggering condition;
wherein the fifth triggering condition comprises at least one of the following:
quality of a candidate neighboring cell comprised in conditional configuration information is greater than or equal to quality of a special cell (SpCell); and
the quality of the SpCell is less than or equal to a ninth threshold and the quality of the candidate neighboring cell comprised in the conditional configuration information is greater than or equal to a tenth threshold;
the sixth triggering condition comprises at least one of the following:
quality of a serving cell comprised in the conditional configuration information is greater than or equal to quality of a special cell (SpCell);
the quality of the SpCell is less than or equal to the ninth threshold and the quality of the serving cell comprised in the conditional configuration information is greater than or equal to a tenth threshold; and
the conditional configuration information comprises a group of first configuration information and an execution condition of corresponding conditional handover.

25. A conditional configuration information processing apparatus, applied to a first network side device and comprising:
a first transmission module, configured to transmit at least one group of first configuration information and an execution condition of conditional handover, wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; and the candidate primary cell comprises a serving cell of a terminal and/or the candidate PSCell comprises the serving cell of the terminal.

26. The apparatus according to claim 25, wherein in a case that the candidate PSCell corresponding to the candidate primary cell is the same as the serving cell of the terminal, the CPAC execution condition corresponding to the candidate PSCell is a first execution condition;
wherein the first execution condition is associated with a first triggering condition; and the first triggering condition comprises at least one of the following:
quality of a serving cell comprised in conditional configuration information is greater than or equal to a first threshold;
the quality of the serving cell comprised in the conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

27. The apparatus according to claim 25, wherein in a case that the candidate primary cell is the same as the serving cell of the terminal, the first network side device configures the execution condition of the conditional handover corresponding to the candidate primary cell to be a second execution condition;
wherein the second execution condition is associated with a second triggering condition; and the second triggering condition comprises at least one of the following:
quality of a serving cell comprised in conditional configuration information is greater than or equal to quality of a special cell (SpCell);
the quality of the SpCell is less than or equal to a third threshold and the quality of the serving cell comprised in the conditional configuration information is greater than or equal to a fourth threshold; and
the conditional configuration information comprises a group of first configuration information and an execution condition of corresponding conditional handover.

28. A conditional configuration information processing apparatus, applied to a third network side device and comprising:
a second obtaining module, configured to obtain a first message transmitted by a first network side device, wherein the first message is used for instructing the third network side device to prepare for conditional handover; and
a second transmission module, configured to transmit a first response message to the first network side device according to the first message, wherein the first response message comprises at least one group of first configuration information; wherein each group of first configuration information comprises a group of configuration information of a candidate primary cell of conditional handover and/or at least one group of conditional PSCell addition/change (CPAC) configuration information; each group of CPAC configuration information comprises configuration information of a candidate PSCell corresponding to the candidate primary cell and a CPAC execution condition corresponding to the configuration information of the candidate PSCell; and the candidate primary cell comprises a serving cell of a terminal and/or the candidate PSCell comprises the serving cell of the terminal.

29. The apparatus according to claim 28, wherein the second transmission module comprises:
a first selection submodule, configured to select at least one candidate primary cell according to the first message;
a first configuration submodule, configured to configure CPAC configuration information for a candidate PSCell corresponding to each selected candidate primary cell;
a first obtaining submodule, configured to obtain at least one group of first configuration information according to the configuration information of the candidate primary cell, the configuration information of the candidate PSCell corresponding to the candidate primary cell, and the CPAC configuration information; and
a first transmission submodule, configured to transmit, to the first network side device, the first response message carrying the first configuration information.

30. A terminal, comprising a processor and a memory, wherein the memory stores a program or an instruction executable on the processor, and the program or the instruction, when executed by the processor, implements the steps of the conditional configuration information processing method according to any one of claims 1 to 6.

31. A network side device, comprising a processor and a memory, wherein the memory stores a program or an instruction executable on the processor; and the program or the instruction, when executed by the processor, implements the steps of the conditional configuration information processing method according to any one of claims 7 to 14, or the steps of the conditional configuration information processing method according to any one of claims 15 to 19.

32. A readable storage medium, having a program or an instruction thereon, wherein the program or the instruction, when executed by a processor, implements the steps of the conditional configuration information processing method according to any one of claims 1 to 6,, or the steps of the conditional configuration information processing method according to any one of claims 7 to 14, or the steps of the conditional configuration information processing method according to any one of claims 15 to 19.
